# EUROPÄISCHE PATENTSCHRIFT

(11) **EP 2 935 920 B1**
(45) Veröffentlichungstag und Bekanntmachung des Hinweises auf die Patenterteilung: **20.09.2017**
(21) Anmeldenummer: 13814025.6
(22) Anmeldetag: 13.11.2013
(51) Int. Cl.: F16C 19/30, F16C 19/46, F16H 57/04, F16C 33/66, F16C 33/76

(54) **AXIALLAGERANORDNUNG**
THRUST BEARING ASSEMBLY
ENSEMBLE DE PALIER DE BUTÉE

(30) Priorität: 20.12.2012 DE 102012223882
(43) Veröffentlichungstag der Anmeldung: 28.10.2015
(73) Patentinhaber: Schaeffler Technologies AG & Co. KG, 91074 Herzogenaurach (DE)
(72) Erfinder: FUGEL, Wolfgang, 90453 Nürnberg (DE); KIRSCHNER, Andreas, 91086 Aurachtal (DE); GEGNER, Martin, 91474 Langenfeld (DE)
(86) Internationale Anmeldenummer: PCT/DE2013/200298
(87) Internationale Veröffentlichungsnummer: WO 2014/094756

(56) Entgegenhaltungen:
- JP-A- 2012 163 185
- US-A- 4 968 157

## Beschreibung

### Gebiet der Erfindung

Die Erfindung betrifft eine Axiallageranordnung nach den oberbegriffsbildenden Merkmalen des Patentanspruchs 1, welche insbesondere vorteilhaft für die Axiallagerung des Sonnenradträgers eines ersten Planetengetriebes gegen den Hohlradtopf eines zweiten Planetengetriebes in einem PKW-Automatikgetriebe geeignet ist.

### Hintergrund der Erfindung

Die häufigste Ausführungsform von PKW-Automatikgetrieben sind sogenannte Wandlergetriebe, die sich von herkömmlichen und von automatisierten Schaltgetrieben vor allem durch einen zugkraftunterbrechungsfreien Schaltvorgang unterscheiden. Derartige PKW-Automatikgetriebe weisen zumeist einen hydraulischen Drehmomentenwandler als Anfahrkupplung auf und setzen sich im Wesentlichen aus mehreren Lamellenkupplungen sowie einer Kombination von mehreren Freiläufen und Planetengetrieben zusammen. Alle Schalt- und Kupplungsvorgänge erfolgen dabei über die Lamellenkupplungen, welche die kraftschlüssige Verbindung der einzelnen Planetengetriebestufen mit den Ein- und Ausgangswellen des Automatikgetriebes herstellen.

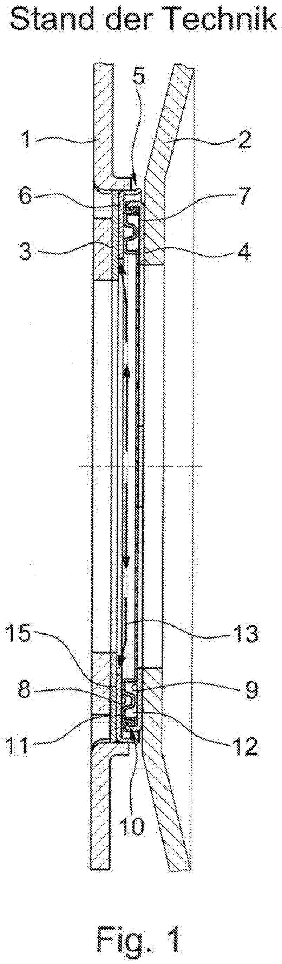

Da während der einzelnen Schaltvorgänge durch die zumeist schrägverzahnten Planetenräder der Planetengetriebe zwischen den Getriebebauteilen auch erhebliche Axialkräfte wirken, sind in modernen Automatikgetrieben zur Vermeidung von Reibungs- und Wirkungsgradverlusten die einzelnen Kupplungs- und Planetenträger durch eine Vielzahl von Axialnadellagern gegeneinander abgestützt. In besonderen Fällen müssen dabei einzelne sich in eine Richtung drehende Planetenträger eines Planetengetriebes gegen einzelne sich in die andere Richtung drehende Planetenträger eines benachbarten Planetengetriebes axial gegeneinander gelagert werden. Eine solche an sich bekannte Lagerung zwischen dem Sonnenradträger eines ersten Planetengetriebes und dem benachbarten Hohlradtopf eines zweiten Planetengetriebes in einem PKW-Automatikgetriebe ist beispielhaft in Figur 1 der beiliegenden Zeichnungen gezeigt und besteht im Wesentlichen aus den beiden drehbaren Trägerbauteilen 1, 2 mit zueinander weisenden kreisringförmigen Stirnflächen 3, 4, zwischen denen ein Axialwälzlagers 5 angeordnet ist. Dabei weist das Axialwälzlager 5 eine an der Stirnfläche 3 des ersten Trägerbauteils 1 anliegende erste ringförmige Winkelscheibe 6 aus einem dünnen Stahlblech und eine an der Stirnfläche 4 des zweiten Trägerbauteils 2 anliegende zweite ringförmige Winkelscheibe 7 aus einem dünnen Stahlblech sowie einen zwischen den axialen Innenseiten 8, 9 der Winkelscheiben 6, 7 abrollenden, durch eine Vielzahl nebeneinander angeordneter und durch einen Lagerkäfig 11 in gleichmäßigen Abständen zueinander gehaltener Lagernadeln 12 gebildeten Nadelkranz 10 auf und wird durch einen von einer zentral durch das Axialwälzlager 5 durchgeführten Welle ausgehenden Schmiermittelstrom 13 geschmiert und gekühlt.

Eine Besonderheit derart angeordneter Axialwälzlager 5 ist es, dass diese auch im lastfreien Zustand hohe, aus den unterschiedlichen Drehrichtungen der benachbarten Planetenträger 1, 2 resultierende Differenzdrehzahlen aufweisen und deshalb auch im lastfreien Zustand immer ausreichend geschmiert und gekühlt werden müssen. In der Praxis hat es sich jedoch gezeigt, dass bei solchen lastfreien Zuständen ein aus dem Axialspiel des Axialwälzlagers 5 resultierender Radialringspalt 15 zwischen dem ersten Trägerbauteil 1 und der ersten Winkelscheibe 6 entsteht, durch den der größte Teil des von der zentral durch das Axialwälzlager 5 durchgeführten Welle ausgehenden Schmiermittelstromes 13 hindurch kriecht, so dass das Axialwälzlager 5 nicht mehr ausreichend geschmiert und gekühlt wird: In Folge dessen kommt es durch Mangelschmierung zu Überhitzungen und zu Lagerschäden, die einen Ausfall des gesamten Automatikgetriebes verursachen können.

Auch durch die US 4 968 157 A1 ist ein Axialwälzlager bekannt, das zwischen zwei drehbaren Trägerbauteilen angeordnet ist und eine an der Stirnfläche des ersten Trägerbauteils anliegende erste ringförmige Winkelscheibe und eine an der Stirnfläche des zweiten Trägerbauteils anliegende zweite ringförmige Winkelscheibe aufweist, wobei zwischen den axialen Innenseiten der Winkelscheiben ein durch eine Vielzahl nebeneinander und durch einen Lagerkäfig in gleichmäßigen Abständen zueinander gehaltener Lagernadeln gebildeten Nadelkranz abrollt, der durch einen von einer zentral durch das Axialwälzlager durchgeführten Welle ausgehenden Schmiermittelstrom geschmiert wird. Zur gezielten Einleitung des Schmiermittelstromes in das Axialwälzlager weist die erste Winkelscheibe dieses Axialwälzlagers dabei eine innendurchmesserseitig angeformte, umlaufende Führungsschräge auf, die frei in einen Ringraum unterhalb des ersten Trägerbauteils hineinragt und das aus der Welle austretende Schmiermittel in das Axialwälzlager leitet.

### Aufgabe der Erfindung

Ausgehend von den dargelegten Nachteilen des bekannten Standes der Technik liegt der Erfindung deshalb die Aufgabe zu Grunde, eine Axiallageranordnung der beschriebenen Art zu konzipieren, bei der sicher gestellt ist, dass das Axialwälzlager auch im lastfreien Zustand ausreichend geschmiert und gekühlt wird.

### Beschreibung der Erfindung

Erfindungsgemäß wird diese Aufgabe bei einer Axiallageranordnung nach dem Oberbegriff des Anspruchs 1 derart gelöst, dass zwischen dem ersten Trägerbauteil und der ersten Winkelscheibe eine federnd ausgebildete, kreisringförmige Rampenscheibe angeordnet ist, mit welcher ein im lastfreien Zustand aus dem Axialspiel des Axialwälzlagers resultierender Radialringspalt zwischen dem ersten Trägerbauteil und der ersten Winkelscheibe gegen Fehlleitungen des Schmiermittelstromes abdichtbar und der Schmiermittelstrom zugleich gezielt in den Lagerinnenraum zwischen den Winkelscheiben einleitbar ist.

Bevorzugte Ausgestaltungen und vorteilhafte Weiterbildungen der erfindungsgemäßen Axiallageranordnung werden in den Unteransprüchen beschrieben.

Danach ist es gemäß Anspruch 2 bei der erfindungsgemäß ausgebildeten Axiallageranordnung vorgesehen, dass die kreisringförmige Rampenscheibe einen Profilquerschnitt mit einem vertikalen Außenabschnitt, einem zumindest annähernd horizontalen Mittelabschnitt und einem schräg vom Mittelabschnitt zum Trägerbauteil verlaufenden Innenabschnitt aufweist.

Der vertikale Außenabschnitt der Rampenscheibe ist dabei nach Anspruch 3 zusammen mit einer zusätzlichen Distanzringscheibe zwischen dem ersten Trägerbauteil und der ersten Winkelscheibe angeordnet und erstreckt sich bis unterhalb des Innendurchmessers der ersten Winkelscheibe. Die zusätzliche Distanzscheibe hat dabei in bekannter Weise die Funktion eines Axialspielausgleichselementes, indem diese mit einer der Toleranzkette aller axial dem Axialwälzlager nachfolgend angeordneter Bauteile entsprechenden Stärke ausgebildet wird. Die Stärke der Distanzscheibe kann dann in einfacher Weise um die Stärke der Rampenscheibe verringert werden, so dass die erfindungsgemäße Rampenscheibe keine Änderungen der Umgebungskonstruktion erfordert. Vom Schutzumfang der vorliegenden Erfindung sollen jedoch auch solche Axiallageranordnungen eingeschlossen sein, bei denen eine solche Distanzscheibe nicht erforderlich ist.

Der sich an den vertikalen Außenabschnitt über einen Radius anschließende horizontale Mittelabschnitt der Rampenscheibe erstreckt sich dann desweiteren gemäß Anspruch 4 geringfügig bis oberhalb der Ebene der Innenseite der ersten Winkelscheibe und weist einen weiteren verrundeten Übergang zum schrägen Innenabschnitt auf, der als Abrisskante für den zum Axialwälzlager gerichteten Schmiermittelstrom ausgebildet ist. Der horizontale Mittelabschnitt und der schräge Innenabschnitt der Rampenscheibe bilden somit zusammen eine Rampe, die den Schmiermittelstrom zunächst über die Innendurchmesserkante der ersten Winkelscheibe des Axialwälzlagers leitet. An der Abrisskante am Ende der Rampe reißt der Schmiermittelstrom dann fliehkraftbedingt von der Rampe ab und wird ungehindert in den Lagerinnenraum zwischen den Winkelscheiben des Axialwälzlagers eingeleitet.

Der schräge Innenabschnitt der Rampenscheibe ist dann nach Anspruch 5 in Winkligkeit und Länge derart ausgebildet, dass dieser mit dem Innendurchmesser der Rampenscheibe am ersten Trägerbauteil zur Anlage kommt und im Einbauzustand der Rampenscheibe unter permanenter Vorspannung steht. Das bedeutet, dass der schräge Innenabschnitt eine sich an der Höhe der kreisringförmigen Stirnfläche des ersten Trägerbauteils orientierende Länge aufweist und derart in einem Winkel zur Radialachse des Axialwälzlagers geneigt angeordnet ist, dass der Innendurchmesser der Rampenscheibe bereits am ersten Trägerbauteil zur Anlage kommt, bevor der vertikale Außenabschnitt der Rampenscheibe auf der Distanzscheibe aufliegt. Dadurch erhält der schräge Innenabschnitt im Einbauzustand der Rampenscheibe eine Vorspannung, mit der ein Unterwandern der Rampenscheibe durch den Schmiermittelstrom vermieden und der im lastfreien Zustand entstehende Radialringspalt zwischen dem ersten Trägerbauteil und der ersten Winkelscheibe gegen Fehlleitungen des Schmiermittelstromes abgedichtet wird.

Eine vorteilhafte Ausgestaltung der erfindungsgemäß ausgebildeten Axialwälzlageranordnung ist es schließlich nach Anspruch 6 noch, dass die Rampenscheibe eine einheitliche Materialstärke zwischen 0,2 mm und 0,4 mm aufweist und bevorzugt aus einem vorgehärteten Bandfederstahl besteht. Hierbei hat sich ein Bandfederstahl der Sorte C75 S H+A aufgrund seiner Verformbarkeit als am geeignetsten erwiesen. Möglich ist es jedoch auch, die Rampenscheibe aus einem unlegierten Bandstahlblech herzustellen, wobei ein Bandstahlblech der Sorte DC 03 durch seine hohe Tiefziehgüte am geeignetsten erscheint.

Zusammenfassend weist die erfindungsgemäß ausgebildete Axiallageranordnung somit gegenüber den aus dem Stand der Technik bekannten Axiallageranordnungen den Vorteil auf, dass durch die Anordnung einer zusätzlichen federnd ausgebildeten Rampenscheibe zwischen dem ersten Trägerbauteil und der ersten Winkelscheibe Fehlleitungen des Schmiermittelstromes durch einen im lastfreien Zustand aus dem Axialspiel des Axialwälzlagers resultierenden Radialringspalt zwischen dem ersten Trägerbauteil und der ersten Winkelscheibe vermieden werden. Darüber hinaus wird durch eine gezielte Einleitung des Schmiermittelstromes über die Rampe der Rampenscheibe in den Lagerinnenraum das Axialwälzlager jederzeit ausreichend geschmiert und gekühlt, so dass aus Mangelschmierung und Überhitzungen resultierende Lagerschäden sowie der Ausfall des gesamten Automatikgetriebes vermieden werden.

### Kurze Beschreibung der Zeichnungen

Eine bevorzugte Ausführungsform der erfindungsgemäß ausgebildeten Axiallageranordnung wird nachfolgend unter Bezugnahme auf die beigefügten Zeichnungen näher erläutert. Dabei zeigen:
- Figur 1: einen Querschnitt durch eine Axiallageranordnung zwischen dem Sonnenradträger eines ersten Planetengetriebes und dem Hohlradtopf eines zweiten Planetengetriebes in einem PKW-Automatikgetriebe nach dem Stand der Technik;
- Figur 2: einen Querschnitt durch eine erfindungsgemäß ausgebildete Axiallageranordnung zwischen dem Sonnenradträger eines ersten Planetengetriebes und dem Hohlradtopf eines zweiten Planetengetriebes in einem PKW-Automatikgetriebe;
- Figur 3: eine vergrößerte Darstellung der Einzelheit X gemäß Figur 2;
- Figur 4: eine vergrößerte Darstellung der Einzelheit Y gemäß Figur 2.

### Ausführliche Beschreibung der Zeichnungen

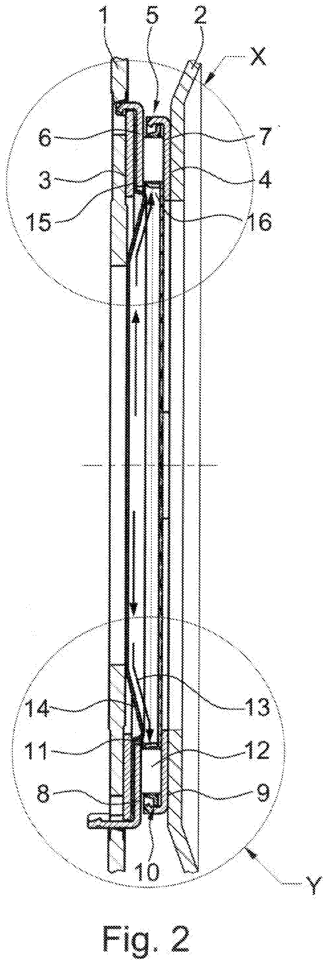

Aus Figur 2 geht eine Axiallageranordnung zwischen dem Sonnenradträger 1 eines ersten Planetengetriebes und dem Hohlradtopf 2 eines zweiten Planetengetriebes in einem PKW-Automatikgetriebe hervor, die im Wesentlichen aus den beiden mit kreisringförmigen Stirnflächen 3, 4 ausgebildeten, drehbaren Trägerbauteilen 1, 2 und einem zwischen diesen Trägerbauteilen 1, 2 angeordnetem Axialwälzlager 5 besteht. Deutlich sichtbar weist dieses Axialwälzlager 5 dabei in bekannter Weise eine an der Stirnfläche 3 des ersten Trägerbauteils 1 anliegende erste ringförmige Winkelscheibe 6 aus einem dünnen Stahlblech und eine an der Stirnfläche 4 des zweiten Trägerbauteils 2 anliegende zweite ringförmige Winkelscheibe 7 aus einem dünnen Stahlblech sowie einen zwischen den axialen Innenseiten 8, 9 der Winkelscheiben 6, 7 abrollenden Nadelkranz 10 auf, der durch eine Vielzahl nebeneinander angeordneter und durch einen Lagerkäfig 11 in gleichmäßigen Abständen zueinander gehaltener Lagernadeln 12 gebildet wird. Darüber hinaus ist in Figur 2 durch Richtungspfeile angedeutet, dass das Axialwälzlager 5 durch einen Schmiermittelstrom 13 geschmiert und gekühlt wird, der von einer zentral durch das Axialwälzlager 5 durchgeführten und in der Zeichnung nicht näher dargestellten Welle ausgeht.

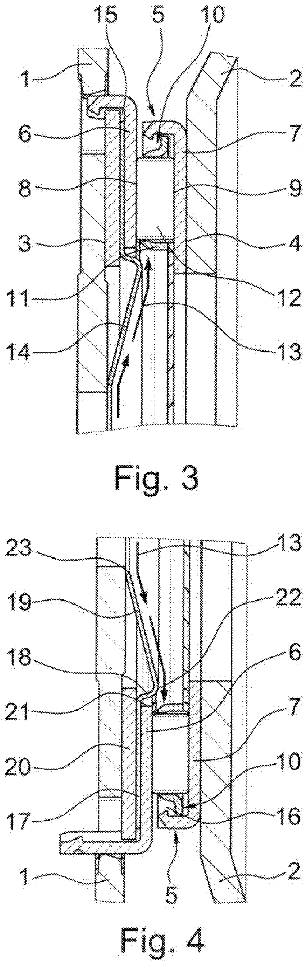

Desweiteren geht aus Figur 2 sowie aus den vergrößerten Darstellungen der Figuren 3 und 4 hervor, dass zwischen dem ersten Trägerbauteil 1 und der ersten Winkelscheibe 6 erfindungsgemäß eine federnd ausgebildete, kreisringförmige Rampenscheibe 14 angeordnet ist, mit welcher ein im lastfreien Zustand aus dem Axialspiel des Axialwälzlagers 5 resultierender Radialringspalt 15 zwischen dem ersten Trägerbauteil 1 und der ersten Winkelscheibe 6 gegen Fehlleitungen des Schmiermittelstromes 13 abdichtbar und der Schmiermittelstrom 13 zugleich gezielt in den Lagerinnenraum 16 zwischen den Winkelscheiben 6, 7 einleitbar ist. Diese kreisringförmige Rampenscheibe 14 weist dabei einen Profilquerschnitt mit einem parallel zur ersten Winkelscheibe 6 verlaufenden Außendurchmesserabschnitt 17, einem zumindest annähernd parallel zur Innendurchmesserfläche 21 der ersten Winkelscheibe 6 verlaufenden mittleren Rampenabschnitt 18 und einem schräg vom Rampenabschnitt 18 zum Trägerbauteil 1 hin verlaufenden Innendurchmesserabschnitt 19 mit einer einheitlichen Materialstärke zwischen 0,2 mm und 0,4 mm auf und besteht bevorzugt aus einem vorgehärteten Bandfederstahl der Sorte C75 S H+A.

Die Figuren 3 und 4 zeigen desweiteren, dass der Außendurchmesserabschnitt 17 der Rampenscheibe 14 zusammen mit einer zusätzlichen Distanzringscheibe 20 zwischen dem ersten Trägerbauteil 1 und der ersten Winkelscheibe 6 angeordnet ist und sich bis über die Innendurchmesserfläche 21 der ersten Winkelscheibe 6 erstreckt. Der Rampenabschnitt 18 der Rampenscheibe 14 erstreckt sich dagegen geringfügig bis über die Ebene der Innenseite 8 der ersten Winkelscheibe 6 und weist einen verrundeten Übergang zum Innendurchmesserabschnitt 19 auf, der als Abrisskante 22 für den wieder mit Richtungspfeilen angedeuteten Schmiermittelstrom 13 ausgebildet ist. Der Innendurchmesserabschnitt 19 der Rampenscheibe 14 ist schließlich noch in Winkligkeit und Länge derart ausgebildet, dass dieser mit dem Innendurchmesser 23 der Rampenscheibe 14 am Trägerbauteil 1 zur Anlage kommt und im Einbauzustand der Rampenscheibe 14 unter permanenter Vorspannung steht. Dadurch wird ein Unterwandern der Rampenscheibe 14 durch den Schmiermittelstrom 13 vermieden und der im lastfreien Zustand entstehende Radialringspalt 15 zwischen dem ersten Trägerbauteil 1 und der ersten Winkelscheibe 6 gegen Fehlleitungen des Schmiermittelstromes 13 abgedichtet.

### Bezugszahlenliste

- 1: Trägerbauteil
- 2: Trägerbauteil
- 3: Stirnfläche von 1
- 4: Stirnfläche von 2
- 5: Axialwälzlager
- 6: erste Winkelscheibe von 5
- 7: zweite Winkelscheibe von 5
- 8: Innenseite von 6
- 9: Innenseite von 7
- 10: Nadelkranz
- 11: Lagerkäfig von 10
- 12: Wälzkörper von 10
- 13: Schmiermittelstrom
- 14: Rampenscheibe
- 15: Radialringspalt
- 16: Lagerinnenraum
- 17: Außendurchmesserabschnitt von 14
- 18: Rampenabschnitt von 14
- 19: Innendurchmesserabschnitt von 14
- 20: Distanzringscheibe
- 21: Innendurchmesserfläche von 6
- 22: Abrisskante
- 23: Innendurchmesser von 14

## Patentansprüche

1. Axiallageranordnung, im Wesentlichen bestehend aus zwei drehbaren Trägerbauteilen (1, 2) mit kreisringförmigen Stirnflächen (3, 4), zwischen denen ein Axialwälzlager (5) angeordnet ist, welches eine an der Stirnfläche (3) des ersten Trägerbauteils (1) anliegende erste ringförmige Winkelscheibe (6) aus einem dünnen Stahlblech und eine an der Stirnfläche (4) des zweiten Trägerbauteils (2) anliegende zweite ringförmige Winkelscheibe (7) aus einem dünnen Stahlblech sowie einen zwischen den axialen Innenseiten (8, 9) der Winkelscheiben (6, 7) abrollenden, durch eine Vielzahl nebeneinander angeordneter und durch einen Lagerkäfig (11) in gleichmäßigen Abständen zueinander gehaltener Lagernadeln (12) gebildeten Nadelkranz (10) aufweist, und welches durch einen von einer zentral durch das Axialwälzlager (5) durchgeführten Welle ausgehenden Schmiermittelstrom (13) geschmiert und gekühlt wird, **dadurch gekennzeichnet, dass** zwischen dem ersten Trägerbauteil (1) und der ersten Winkelscheibe (6) eine federnd ausgebildete, kreisringförmige Rampenscheibe (14) angeordnet ist, mit welcher ein im lastfreien Zustand aus dem Axialspiel des Axialwälzlagers (5) resultierender Radialringspalt (15) zwischen dem ersten Trägerbauteil (1) und der ersten Winkelscheibe (6) gegen Fehlleitungen des Schmiermittelstromes (13) abdichtbar und der Schmiermittelstrom (13) zugleich gezielt in den Lagerinnenraum (16) zwischen den Winkelscheiben (6, 7) einleitbar ist.

2. Axiallageranordnung nach Anspruch **1, dadurch gekennzeichnet, dass** die kreisringförmige Rampenscheibe (14) einen Profilquerschnitt mit einem parallel zur ersten Winkelscheibe (6) verlaufenden Außendurchmesserabschnitt (17), einem zumindest annähernd parallel zur Innendurchmesserfläche (21) der ersten Winkelscheibe (6) verlaufenden mittleren Rampenabschnitt (18) sowie einem schräg vom Rampenabschnitt (18) zum Trägerbauteil (1) hin verlaufenden Innendurchmesserabschnitt (19) aufweist.

3. Axiallageranordnung nach Anspruch 2, **dadurch gekennzeichnet, dass** der Außendurchmesserabschnitt (17) der Rampenscheibe (14) zusammen mit einer zusätzlichen Distanzringscheibe (20) zwischen dem ersten Trägerbauteil (1) und der ersten Winkelscheibe (6) angeordnet ist und sich bis über die Innendurchmesserfläche (21) der ersten Winkelscheibe (6) hinaus erstreckt.

4. Axiallageranordnung nach Anspruch 3, **dadurch gekennzeichnet, dass** der Rampenabschnitt (18) der Rampenscheibe (14) sich geringfügig bis über die Ebene der Innenseite (8) der ersten Winkelscheibe (6) zur zweiten Winkelscheibe (7) hin erstreckt und zum Innendurchmesserabschnitt (19) der Rampenscheibe (14) einen verrundeten Übergang aufweist, der als Abrisskante (22) für den Schmiermittelstrom (13) ausgebildet ist.

5. Axiallageranordnung nach Anspruch 4, **dadurch gekennzeichnet, dass** der Innendurchmesserabschnitt (19) der Rampenscheibe (14) in Winkligkeit und Länge derart ausgebildet ist, dass dieser mit dem Innendurchmesser (23) der Rampenscheibe (14) am Trägerbauteil (1) zur Anlage kommt und im Einbauzustand der Rampenscheibe (14) unter permanenter Vorspannung steht.

6. Axiallageranordnung nach Anspruch 1, **dadurch gekennzeichnet, dass** die Rampenscheibe (14) eine einheitliche Materialstärke zwischen 0,2 mm und 0,4 mm aufweist und bevorzugt aus einem vorgehärteten Bandfederstahl, wie beispielsweise C75 S H+A, oder aus einem unlegierten Bandstahlblech, wie beispielsweise DC 03, besteht.

## Claims

1. Thrust bearing assembly, essentially consisting of two rotatable support components (1, 2) with circular end faces (3, 4), between which there is arranged a rolling element thrust bearing (5) which has a first annular angle disc (6), that bears against the end face (3) of the first support component (1) and is made of thin steel sheet, and a second annular angle disc (7), that bears against the end face (4) of the second support component (2) and is made of thin steel sheet, and a needle ring (10) rolling between the axial inner sides (8, 9) of the angle discs (6, 7), which is formed by a multiplicity of bearing needles (12) arranged next to one another and held at a regular distance from one another by a bearing cage (11); and which is lubricated and cooled by a lubricant flow (13) from a shaft passing centrally through the rolling element thrust bearing (5), **characterized in that** between the first support component (1) and the first angle disc (6) there is arranged a resilient circular ramp disc (14) with which it is possible to prevent misrouting of the lubricant flow (13) through a radial annular gap (15) between the first support component (1) and the first angle disc (6), which gap appears in the unloaded state due to the axial play of the rolling element thrust bearing (5), and at the same time to convey the lubricant flow (13) in a targeted manner into the bearing interior (16) between the angle discs (6, 7).

2. Thrust bearing assembly according to Claim 1, **characterized in that** the circular ramp disc (14) has a profile cross section with an outer diameter section (17) running parallel to the first angle disc (6), an intermediate ramp section (18) running at least approximately parallel to the inner diameter surface (21) of the first angle disc (6), and an inner diameter section (19) running obliquely from the ramp section (18) to the support component (1).

3. Thrust bearing assembly according to Claim 2, **characterized in that** the outer diameter section (17) of the ramp disc (14), together with an additional spacer ring disc (20), is arranged between the first support component (1) and the first angle disc (6), and extends to beyond the inner diameter surface (21) of the first angle disc (6).

4. Thrust bearing assembly according to Claim 3, **characterized in that** the ramp section (18) of the ramp disc (14) extends slightly to beyond the plane of the inner side (8) of the first angle disc (6) towards the second angle disc (7) and has a rounded transition to the inner diameter section (19) of the ramp disc (14) which is formed as a separation edge (22) for the lubricant flow (13).

5. Thrust bearing assembly according to Claim 4, **characterized in that** the inner diameter section (19) of the ramp disc (14) is designed in terms of angle and length such that the inner diameter section, with the inner diameter (23) of the ramp disc (14), comes to bear against the support component (1) and, in the installed state of the ramp disc (14), is permanently prestressed.

6. Thrust bearing assembly according to Claim 1, **characterized in that** the ramp disc (14) has a uniform material thickness of between 0.2 mm and 0.4 mm, and is preferably made of a pre-hardened spring band steel such as C75 S H+A, or of an unalloyed band steel sheet such as DC 03.

## Revendications

1. Disposition de palier axial, constitué pour l'essentiel de deux éléments structurels de support (1, 2) rotatifs qui comportent des surfaces frontales (3, 4) en forme de couronne circulaire, entre lesquelles est disposé un palier de roulement axial (5), lequel présente:
- un premier disque coudé (6) de forme annulaire qui est formé d'une mince tôle d'acier et qui vient prendre appui contre la surface frontale (3) du premier élément structurel de support (1);
- un deuxième disque coudé (7) de forme annulaire qui est formé d'une mince tôle d'acier et qui vient prendre appui contre la surface frontale (4) du deuxième élément structurel de support (2) ; ainsi que
- une cage à aiguilles (10), laquelle se déroule entre les faces internes (8, 9) axiales des disques coudés (6, 7) et laquelle est formée d'une pluralité d'aiguilles de roulement (12) qui sont disposées les unes à côté des autres et qui sont maintenues par une cage de palier (11) à des distances régulières les unes par rapport aux autres ; et
lequel palier de roulement axial est lubrifié et réfrigéré par l'intermédiaire d'un flux de produit lubrifiant (13) qui sort d'un arbre, lequel est positionné de manière centrale et passe à travers le palier de roulement axial (5);
**caractérisée en ce qu'**un disque à rampe (14), lequel est en forme de couronne circulaire et réalisé de façon élastique, est disposé entre le premier élément structurel de support (1) et le premier disque coudé (6), au moyen duquel disque à rampe une fente annulaire radiale (15), qui résulte du jeu axial du palier de roulement axial (5) à l'état de non chargement, peut être rendue étanche entre le premier élément structurel de support (1) et le premier disque coudé (6) pour éviter les écoulements intempestifs du flux de produit lubrifiant (13) et le flux de produit lubrifiant (13) peut, dans le même temps, être mis en place de manière ciblée entre les disques coudés (6, 7), dans le compartiment intérieur du palier (16).

2. Disposition de palier axial selon la revendication 1, **caractérisée en ce que** le disque à rampe (14) en forme de couronne circulaire présente une section transversale de profilé qui comporte une section de diamètre externe (17), laquelle court parallèlement au premier disque coudé (6), une section de rampe (18) centrale, laquelle court tout au moins à peu près parallèlement à la surface de diamètre interne (21) du premier disque coudé (6), ainsi qu'une section de diamètre interne (19), laquelle court de manière inclinée depuis la section de rampe (18) jusqu'à l'élément structurel de support (1).

3. Disposition de palier axial selon la revendication 2, **caractérisée en ce que** la section de diamètre externe (17) du disque à rampe (14) est disposée, ensemble avec une rondelle annulaire d'écartement (20) supplémentaire, entre le premier élément structurel de support (1) et le premier disque coudé (6) et s'étend jusqu'au-delà de la surface de diamètre interne (21) du premier disque coudé (6).

4. Disposition de palier..axial selon la revendication 3, **caractérisée en ce que** la section de rampe (18) du disque à rampe (14) s'étend légèrement jusqu'au-delà du plan de la face interne (8) du premier disque coudé (6) en direction du deuxième disque coudé (7) et présente un passage arrondi en direction de la section de diamètre interne (19) du disque à rampe (14), lequel passage se présente sous la forme d'une arête de rupture (22) pour le flux de produit lubrifiant (13).

5. Disposition de palier axial selon la revendication 4, **caractérisée en ce que** la section de diamètre interne (19) du disque à rampe (14) est conçue dans une telle angularité et dans une telle longueur que ladite section de diamètre interne vient prendre appui contre l'élément structurel de support (1) avec le diamètre interne (23) du disque à rampe (14) et se trouve dans un état de tension préalable permanente, quand le disque à rampe (14) est mis en place.

6. Disposition de palier axial selon la revendication 1, **caractérisée en ce que** le disque à rampe (14) présente une épaisseur unitaire de matériau comprise entre 0,2 mm et 0,4 mm, lequel matériau est de préférence constitué en un acier préalablement trempé de type ressort en ruban, tel que par exemple un matériau C75 S H+A, ou constitué en une tôle d'acier en bande non alliée, telle que par exemple un matériau DC 03.
